# EUROPEAN PATENT APPLICATION

(11) **EP 4 365 315 A1**
(43) Date of publication of application: **08.05.2024**
(21) Application number: 22832953.8
(22) Date of filing: 22.06.2022
(51) Int. Cl.: C21D 1/00, F16L 59/02, F27D 1/06, F27D 3/02

(54) **HEAT-INSULATING BLOCK STRUCTURE FOR SKID POST AND CONSTRUCTION METHOD THEREOF**

(30) Priority: 01.07.2021 JP 2021110288
(71) Applicant: Krosakiharima Corporation, Kitakyushu-shi, Fukuoka 806-8586 (JP)
(72) Inventor: IWATA, Toshiyuki, Kitakyushu-shi, Fukuoka 806-8586 (JP); KAWABE, Yusuke, Kitakyushu-shi, Fukuoka 806-8586 (JP); IKEBE, Tetsunori, Kitakyushu-shi, Fukuoka 806-8586 (JP)
(74) Representative: Vossius & Partner Patentanwälte Rechtsanwälte mbB
(86) International application number: PCT/JP2022/024824
(87) International publication number: WO 2023/276805

(57) **Abstract**

Provided are a thermal insulating block structure for a skid post, capable of suppressing relative rotation among constructed thermal insulating blocks, and a construction method therefor. The thermal insulating structure is constructed by combining and stacking three types of thermal insulating blocks around a skid post 11, wherein the three types of thermal insulating blocks consist of: a lowermost thermal insulating block 3 disposed at a lowermost tier; a middle thermal insulating block 4 stacked on the lowermost thermal insulating block in at least one or more tiers; and an uppermost thermal insulating block 5 disposed on an uppermost tier of the middle thermal insulating block 4. The lowermost thermal insulating block has a concave part in a circumferentially middle region of an upper surface thereof, and two convex parts in circumferentially opposite end regions of the upper surface. The middle thermal insulating block has a concave part in a circumferentially middle region of each of an upper surface and a lower surface thereof, and two convex parts in circumferentially opposite end regions of each of the upper and lower surfaces. The uppermost thermal insulating block has a concave part in a circumferentially middle region of a lower surface thereof, and two convex parts in circumferentially opposite end regions of the lower surface. Each of the lowermost thermal insulating block, the middle thermal insulating block, and the uppermost thermal insulating block is provided in a number of two or more, wherein two or more pairs of adjacent ones of the convex parts of the upper surfaces of the two or more lowermost thermal insulating blocks which are placed adjacently are fitted, respectively, to the two or more concave parts of the lower surfaces of lowermost tiers of the two or more middle thermal insulating blocks, and two or more pairs of adjacent ones of the convex parts of the upper surfaces of uppermost tires of the two or more middle thermal insulating blocks which are placed adjacently are fitted, respectively, to the two or more concave parts of the lower surfaces of the two or more uppermost thermal insulating blocks.

## Description

### TECHNICAL FIELD

The present invention relates to a thermal insulating block structure for a skid post, i.e., a thermal insulating block structure constructed around a skid post of a skid pipe constituting a walking beam of a heating furnace, and a construction method therefor.

### BACKGROUND ART

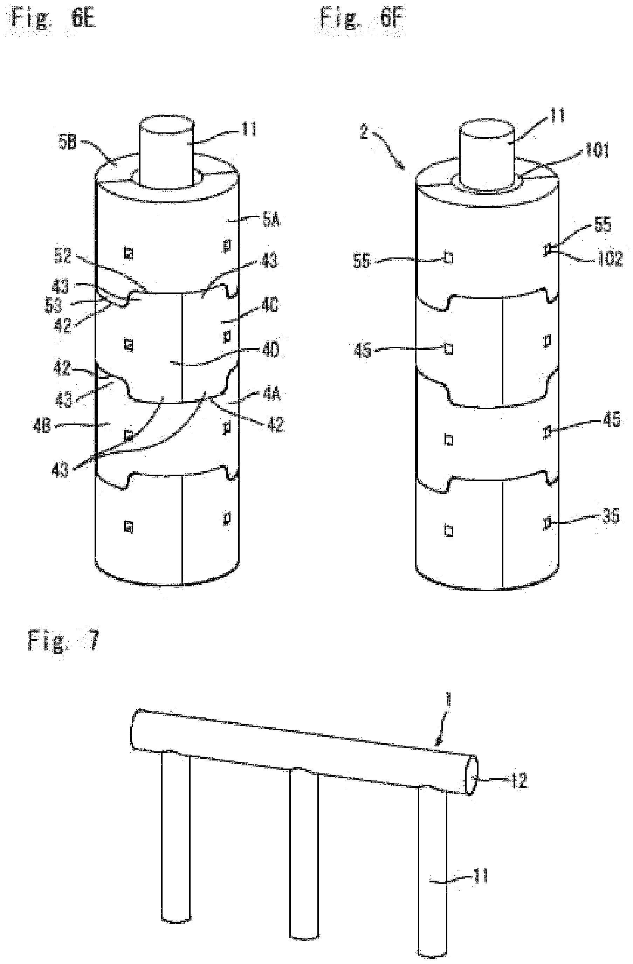

As conceptually illustrated in FIG. 7, a skid pipe 1 constituting a walking beam of a heating furnace comprises a plurality of skid posts 11 each extending in a vertical direction, and a single skid beam 12 extending in a horizontal direction, wherein a water-cooled pipe is used for each of the skid posts 11 and the skid beam 12 for the purpose of maintaining strength for supporting a heavy load. Further, a thermal insulating material and a thermal insulating block are installed around the skid pipe 1 to reduce heat loss from the heating furnace to cooling water flowing through the skid pipe 1. In some cases, two or more thermal insulating blocks are placed laterally and stacked vertically in adjacent relation to each other, around the skid post 11 of the skid pipe 1. Specifically, the following Patent Document 1 discloses a structure which allows laterally and vertically adjacent thermal insulating blocks to be fitted to each other.

### CITATION LIST

### [Patent Document]

Patent Document 1: Microfilm of Japanese Utility Model Application No. S59-49547 (JP-U S60-161788)

### SUMMARY OF INVENTION

### [Technical Problem]

When laterally and vertically adjacent thermal insulating blocks are simply fitted to each other, the vertically-constructed thermal insulating blocks can be rotated relative to each other. If the vertically-constructed thermal insulating blocks are rotated relative to each other, the thermal insulating blocks easily undergoes wear damage due to friction, etc., during the relative rotation, because they are formed of a porous material for the purpose of ensuring a thermal insulating property.

Therefore, a technical problem to be solved by the present invention is to provide a thermal insulating block structure for a skid post, capable of suppressing relative rotation among constructed thermal insulating blocks, and a construction method therefor.

### [Solution to Technical Problem]

The scope of the present invention is as follows.
1. A thermal insulating structure constructed by combining and stacking three types of thermal insulating blocks around a skid post, the three types of thermal insulating blocks consisting of: a lowermost thermal insulating block disposed at a lowermost tier; a middle thermal insulating block stacked on the lowermost thermal insulating block in at least one or more tiers; and an uppermost thermal insulating block disposed on an uppermost tier of the middle thermal insulating block, wherein:
   the lowermost thermal insulating block has a concave part in a circumferentially middle region of an upper surface thereof, and two convex parts in circumferentially opposite end regions of the upper surface;
   the middle thermal insulating block has a concave part in a circumferentially middle region of each of an upper surface and a lower surface thereof, and two convex parts in circumferentially opposite end regions of each of the upper and lower surfaces;
   the uppermost thermal insulating block has a concave part in a circumferentially middle region of a lower surface thereof, and two convex parts in circumferentially opposite end regions of the lower surface; and wherein:
      each of the lowermost thermal insulating block, the middle thermal insulating block, and the uppermost thermal insulating block is provided in a number of two or more; and wherein
      two or more pairs of adjacent ones of the convex parts of the upper surfaces of the two or more lowermost thermal insulating blocks which are placed adjacently are fitted, respectively, to the two or more concave parts of the lower surfaces of lowermost tiers of the two or more middle thermal insulating blocks; and
      two or more pairs of adjacent ones of the convex parts of the upper surfaces of uppermost tires of the two or more middle thermal insulating blocks which are placed adjacently are fitted, respectively, to the two or more concave parts of the lower surfaces of the two or more uppermost thermal insulating blocks.
2. The thermal insulating structure as set forth in the section 1, wherein the concave part and each of the convex parts in each of the lowermost, middle and uppermost thermal insulating blocks are continuously connected to each other by an inclined surface.
3. The thermal insulating structure as set forth in section 1 or 2, wherein a gap is provided between a stack of the lowermost, middle and uppermost thermal insulating blocks, and the skid post, and a castable thermal insulating material layer is provided in the gap.
4. A construction method for a thermal insulating block structure, wherein the thermal insulating structure is constructed by combining and stacking three types of thermal insulating blocks around a skid post, the three types of thermal insulating blocks consisting of: a lowermost thermal insulating block disposed at a lowermost tier; a middle thermal insulating block disposed on the lowermost thermal insulating block; and an uppermost thermal insulating block disposed on the middle thermal insulating block, wherein: the lowermost thermal insulating block has a concave part in a circumferentially middle region of an upper surface thereof, and two convex parts in circumferentially opposite end regions of the upper surface; the middle thermal insulating block has a concave part in a circumferentially middle region of each of an upper surface and a lower surface thereof, and two convex parts in circumferentially opposite end regions of each of the upper and lower surfaces; and the uppermost thermal insulating block has a concave part in a circumferentially middle region of a lower surface thereof, and two convex parts in circumferentially opposite end regions of the lower surface; and wherein each of the lowermost thermal insulating block, the middle thermal insulating block, and the uppermost thermal insulating block is provided in a number of two, the construction method comprising:
   a first step of placing the two, first and second, lowermost thermal insulating blocks around the skid post such that the two convex parts of the first lowermost thermal insulating block come to be adjacent, respectively, to the two convex parts of the second lowermost thermal insulating block;
   a second step of placing the two middle thermal insulating blocks adjacently such that the two concave parts of the lower surfaces thereof are fit, respectively, to two pairs of adjacent ones of the convex parts of the first and second lowermost thermal insulating blocks; and
   a third step of placing the two, first and second, uppermost thermal insulating blocks such that the two convex parts of the first uppermost thermal insulating block come to be adjacent, respectively, to the two convex parts of the second uppermost thermal insulating block, and two pairs of adjacent ones of the convex parts of the first and second uppermost thermal insulating blocks are fitted, respectively, to the two concave parts of the upper surfaces of the adjacently-placed middle thermal insulating blocks.
5. The construction method as set forth in the section 4, wherein the second step includes a step of fitting two concave parts of lower surfaces of an additional set of the two middle thermal insulating blocks, respectively, to two pairs of adjacent ones of the convex parts of the upper surfaces of the adjacently-placed middle thermal insulating blocks, thereby stacking them.
6. The construction method as set forth in the section 4 or 5, further comprising a step of casting a castable thermal insulating material into a gap between the skid post and a stack of the lowermost, middle and uppermost thermal insulating blocks.

### [Effect of Invention]

The present invention can suppress relative rotation among the constructed thermal insulating blocks.

### BRIEF DESCRIPTION OF DRAWINGS

FIG. 1 is a perspective view of a thermal insulating block structure for a skid post, according to one embodiment of the present invention.
FIG. 2A is a perspective view of a lowermost thermal insulating block.
FIG. 2B is a perspective view of a middle thermal insulating block.
FIG. 2C is a perspective view of an uppermost thermal insulating block.
FIG. 3 is a perspective view of a retainer.
FIG. 4 is an enlarged sectional view of the area A in FIG. 1.
FIG. 5 is a perspective view showing another example of the shape of the retainer.
FIG. 6A is a diagram showing a thermal insulating block construction process.
FIG. 6B is a diagram showing a thermal insulating block construction process.
FIG. 6C is a diagram showing a thermal insulating block construction process.
FIG. 6D is a diagram showing a thermal insulating block construction process.
FIG. 6E is a diagram showing a thermal insulating block construction process.
FIG. 6F is a diagram showing a thermal insulating block construction process.
FIG. 7 is a schematic perspective view of a skid pipe.

### DESCRIPTION OF EMBODIMENTS

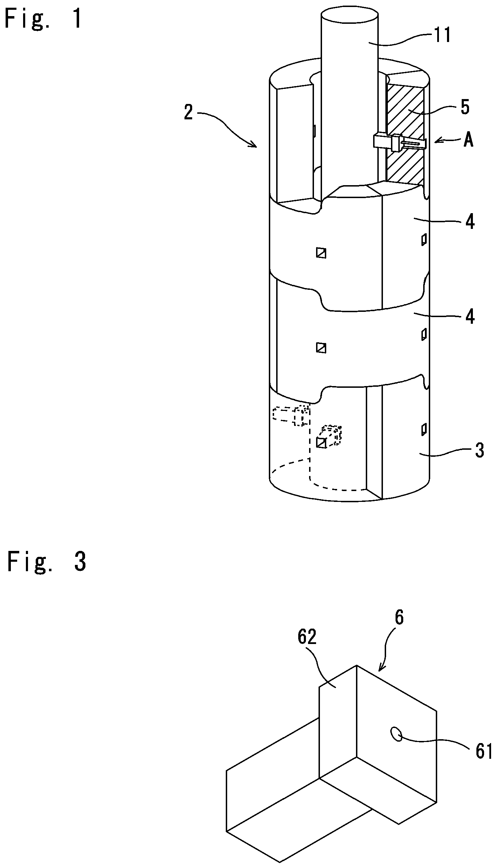

FIG. 1 shows a perspective view of a thermal insulating block structure for a skid post, according to one embodiment of the present invention. The thermal insulating block structure 2 for a skid post (hereinafter referred to simply as "thermal insulating block structure") illustrated in FIG. 1 is constructed by combining and stacking three types of thermal insulating blocks: a lowermost thermal insulating block 3; a middle thermal insulating block 4; and an uppermost thermal insulating block 5, around a skid post 11 of a skid pipe 1 illustrated in FIG. 7. In FIG. 1, one of two uppermost thermal insulating blocks 5 is omitted, wherein the remaining one uppermost thermal insulating block 5 is partly shown in section. Further, an internal structure of one of two lowermost thermal insulating blocks 3 is indicated by broken lines.

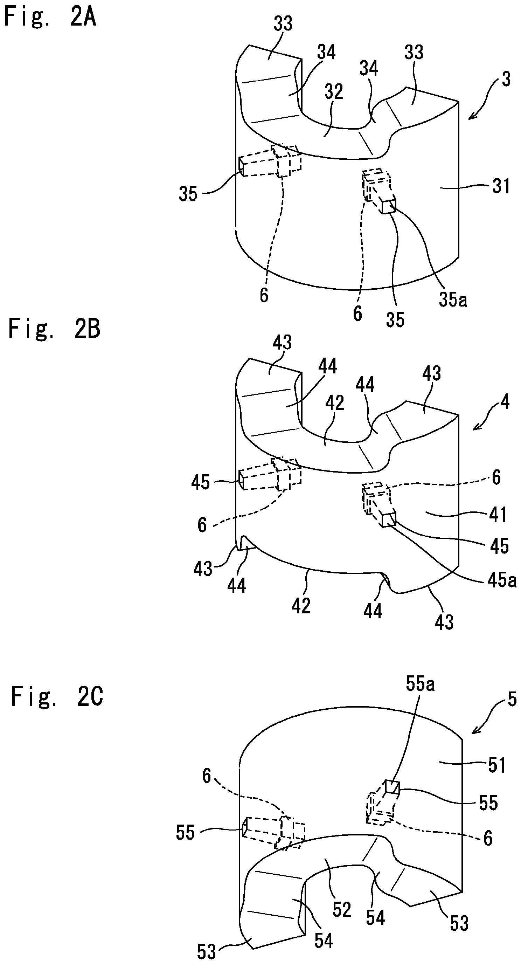

FIG. 2A, FIG. 2B and FIG. 2C show a perspective view of the lowermost thermal insulating block 3, a perspective view of the middle thermal insulating block 4, and a perspective view of the uppermost thermal insulating block 5, respectively. Each of the lowermost thermal insulating block 3, the middle thermal insulating block 4 and the uppermost thermal insulating block 5 is a precast block obtained by preliminarily performing casting in a flask, and has a semi-hollow cylindrical shape obtained by dividing a hollow cylindrical body equally into two circumferential segments. The lowermost thermal insulating block 3, the middle thermal insulating block 4 and the uppermost thermal insulating block 5 comprise, respectively, a block body 31, a block body 41 and a block body 51 each made of a material which comprises CaO · 6Al₂O₃ as a mineral composition and to which a porous thermal-insulating aggregate is added (this material will hereinafter be referred to as "CA6 material"). It should be noted here that the material of the block bodies 31, 41, 51 is not limited to the CA6 material, but may be any other material as long as it can ensure a desired thermal insulating property. However, from the strength and thermal insulating property of the blocks, the material of the block bodies 31, 41, 51 is preferably a CaO-Al₂O₃ based material, particularly preferably the CA6 material.

As shown in FIG. 2A, the lowermost thermal insulating block 3 has a concave part 32 in a circumferentially middle region of an upper surface thereof, and two convex parts 33 in circumferentially opposite end regions of the upper surface, wherein the concave part 32 is continuously connected to the convex parts 33 by two inclined surfaces 34, respectively. Further, each of a connection area between the concave part 32 and each of the inclined surfaces 34 and a connection area between corresponding ones of the inclined surfaces 34 and the convex parts 33 is formed in a curved surface.

As shown in FIG. 2B, the middle thermal insulating block 4 has a concave part 42 in a circumferentially middle region of each of an upper surface and a lower surface thereof, and two convex parts 43 in circumferentially opposite end regions of each of the upper and lower surfaces, wherein in each of the upper and lower surfaces, the concave part 42 is continuously connected to the convex parts 43 by two inclined surfaces 44, respectively. Further, in each of the upper and lower surfaces, each of a connection region between the concave part 42 and each of the inclined surfaces 44 and a connection region between corresponding ones of the inclined surfaces 44 and the convex parts 43 is formed in a curved surface.

As shown in FIG. 2C, the lowermost thermal insulating block 5 has a concave part 52 in a circumferentially middle region of a lower surface thereof, and two convex parts 53 in circumferentially opposite end regions of the lower surface, wherein the concave part 32 is continuously connected to the convex parts 33 by two inclined surfaces 54, respectively. Further, each of a connection region between the concave part 52 and each of the inclined surfaces 54 and a connection region between corresponding ones of the inclined surfaces 54 and the convex parts 53 is formed in a curved surface. In this embodiment, the uppermost thermal insulating block 5 has a shape obtained by turning the lowermost thermal insulating block 3 upside down.

In each of the lowermost thermal insulating block 3, the middle thermal insulating block 4 and the uppermost thermal insulating block 5, the block body (31, 41, 51) has a through-hole (35, 45, 55) penetrating in a radial direction from an outer peripheral surface to an inner peripheral surface of the insulating block body, i.e. in a horizontal direction toward an outer peripheral surface of the skid post 11. The through-hole (35, 45, 55) is provided in the number of two at intervals in the circumferential direction of the block body (31, 41, 51). Specifically, the through-hole (35, 45, 55) is provided in a number of two, wherein the two through-holes are located at respective positions at a center angle of 45° in circumferentially opposite directions with respect to a radially-extending vertical plane that equally divides the block body (31, 41, 51) into two circumferential segments. In other words, the two through-holes (35, 45, 55) are provided, respectively, along non-central two of three radially-extending vertical planes that equally divide the semi-hollow cylindrical block body (31, 41, 51) into four circumferential segments. The thermal insulating block body (31, 41, 51) has a shape that is plane-symmetric with respect to the radially-extending vertical plane that equally divides the block body (31, 41, 51) into two circumferential segments, as a whole including the position and shape of the through-hole (35, 45, 55).

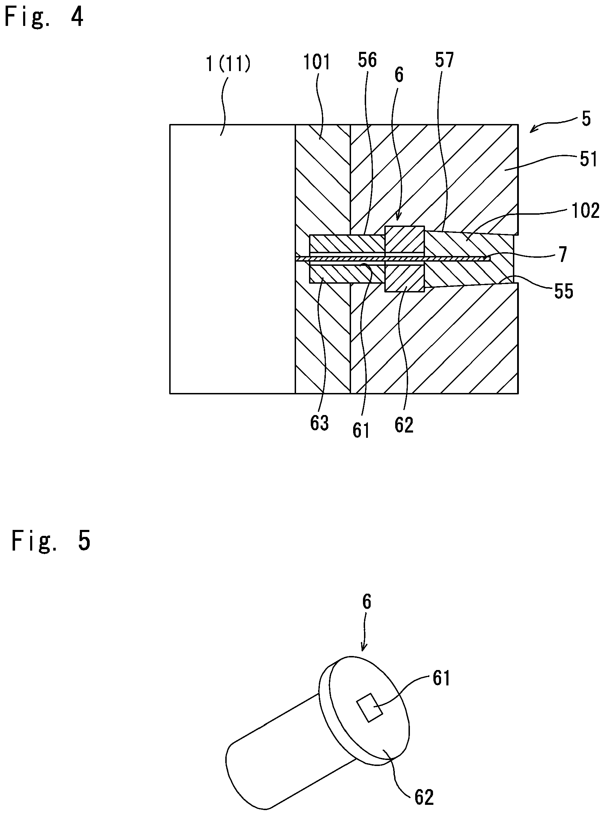

A retainer 6 is mounted to each of the through-holes 35, 45, 55. FIG. 3 is a perspective view showing the retainer 6. The retainer 6 is a common component for all the through-holes 35, 45, 55, and is mounted to each of the through-holes 35, 45, 55 in the same aspect. Therefore, the configuration of the retainer 6 and the aspect of mounting to the through-hole 55 will be described with reference to FIG. 4 which is an enlarged sectional view of the area A in FIG. 1, together with FIG. 3.

In this embodiment, the retainer 6 is buried in an inner wall surface of the through-hole 55 of the block body 51. In this embodiment, the retainer 6 is mounted to the through-hole 55 in such a manner as to be buried, particularly, in a distal end region of the through-hole 55, i.e., in one end region of the through-hole 55 on the side of the inner peripheral surface of the block body 51. Specifically, the retainer 6 illustrated in FIG. 4 is buried in the distal end region of the through-hole 55 by, when the uppermost thermal insulating block 5 which is a precast block is produced by performing casting in a flask, disposing the retainer 6 within the flask in a location corresponding to the distal end region of the through-hole 55. Here, a space 55a is formed in a base end region of the through-hole 55, i.e., a region of the through-hole 55 between the retainer 6 and a base end of the through-hole 55 (in the other end region of the through-hole 55 on the side of the outer peripheral surface of the block body 51), as appearing in FIG. 2C. This space 55a may be formed by disposing a core having a corresponding shape within a flask. The space 55a may be filled with a sealing material 102 made of alumina or the CA6 material, after a stud 7 is welded to the skid post 11 as shown in FIG. 4. In the same manner, spaces 35a, 44a are provided, respectively, in the through-holes 35, 45 of the lowermost thermal insulating block 3 and the middle thermal insulating block 4, as shown in FIGS. 2A and 2B,

The reason for providing the space (35a, 45a, 55a) in the base end region of the through-hole (35, 45, 55) between the retainer 6 and the base end side (in the other end region of the through-hole (35, 45, 55) on the side of the outer peripheral surface of the block body 51) is to allow a welding gun to be inserted into the space and positioned when welding the stud 7 to the skid post 11 as described below. It is also intended to create a working area for allowing the welding gun to hold the stud 7 whose length is set to be greater than the entire length of the retainer 6. Further, in a case where welding is performed without inserting the welding gun into the through-hole, the position of the stud does not come to the center of the through-hole, thereby possibly causing a problem that the stud is brought into interference with the retainer, or the through-hole is chipped by the stud, when the stud is inserted into the through-hole. In addition, it is intended to receive the stud within the space so as to allow the stud to be distanced from the outer peripheral surface of the block body as far as possible. This makes it possible to prevent heat from escaping to the outside through the stud.

The retainer 6 is made of a ceramic material such as alumina and has an approximately quadrangular prism shape. A central portion of the retainer 6 has an insertion hole 61 through which the stud 7 is inserted, wherein the insertion hole 61 is continuous with the through-hole 55. The retainer 6 has a rectangular-shaped flange 62 at one end thereof on the side of the outer peripheral surface of the block body 51. On the other hand, the inner wall surface of the through-hole 55 has a locking part 56 in one end region thereof on the side of the inner peripheral surface of the block body 51. The flange 62 of the retainer 6 is engaged with and locked by the locking part 56 in a direction from the outer peripheral surface to the inner peripheral surface of the block body 51. That is, the flange 62 of the retainer 6 functions as an engaging part which is engaged with and locked by the locking part 56 in the direction from the outer peripheral surface to the inner peripheral surface of the block body 51. In this way, the flange 62 of the retainer 6 is engaged with and locked by the locking part 56 in the direction from the outer peripheral surface to the inner peripheral surface of the block body 51, so that the retainer 6 becomes less likely to being disengaged from the through-hole 55 toward the inner peripheral surface of the block body 51.

The inner wall surface of the through-hole 55 also has a locking part 57 in the other end region thereof on the side of the outer peripheral surface of the block body 51. The flange 62 of the retainer 6 is engaged with and locked by the locking part 57 in a direction from the outer peripheral surface to the outer peripheral surface of the block body 51. Thus, the retainer 6 becomes less likely to being disengaged from the through-hole 55 toward the outer peripheral surface of the block body 51. Further, the through-hole 55 is gradually narrowed in a region thereof extending from the flange 51 to the outer peripheral surface of the block body 51. This also allows the retainer 6 to become less likely to be disengaged from the through-hole 55 toward the outer peripheral surface of the block body 51.

The retainer 6 has a protruding portion 63 which protrudes from the inner peripheral surface of the block body 51. The retainer 6 is installed to have the protruding portion 63 in the above manner, so that it becomes easy to ensure a gap between the outer peripheral surface of the skid post 11 and the inner peripheral surface of the block body 51. The protruding portion 63 also produces an effect of increasing the length of the retainer 6 to allow the stud 7 to contact with the retainer 6 over a certain length or more, thereby securing a force to support the stud 7.

It should be noted that the shape of the retainer 6 is not limited to the shape as shown in FIG. 3, but may be, e.g., an approximately cylindrical shape with a disk-shaped flange 62 as shown in FIG. 5. Alternatively, the shape of the retainer 6 may be a simple prismatic or columnar shape having no flange. In either case, the retainer 6 has only to have the insertion hole 61 through which the stud is inserted. It should also be noted that the cross-sectional shape of the insertion hole 61 is not particularly limited, but may be a circular shape illustrated in FIG. 3, or may be a rectangular shape as shown in FIG. 5. It should further be noted that the retainer 6 may be mounted to the through-hole 55 in a manner other than burying, i.e., fixing, in the distal end region of the through-hole 55 of the block body 51. For example, the retainer 6 may be mounted to the through-hole 55 such that it is movable within the through-hole 55. In particular, the retainer 6 may be configured to be movable in a radial direction of the block body 51. In this case, it becomes possible to adjust the gap between the inner peripheral surface of the block body 51 and the outer peripheral surface of the skid post 11.

Next, a construction method for installing the three types of thermal insulating blocks: the lowermost thermal insulating block 3; the middle thermal insulating block 4; and the uppermost thermal insulating block 5, around the skid post, will be described. The uppermost thermal insulating block 5 is obtained by turning the lowermost thermal insulating block 3 upside down, as mentioned above. However, since an installation direction is different therebetween, they are distinguished from each other in term of the type of thermal insulating block.

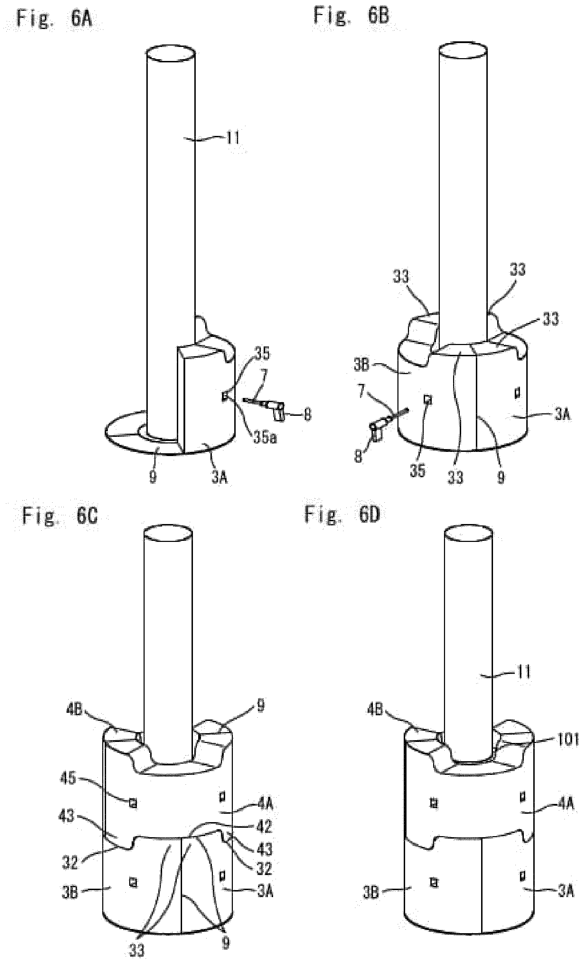

First, as shown in FIG. 6A, a first lowermost thermal insulating block 3 A is placed around the skid post 11. At this time, a gap of a given width is ensured between the outer peripheral surface of the skip post 11 and the inner peripheral surface of the first lowermost thermal insulating block 3A as a space for casting a castable thermal insulating material in a post-step. In this process, since the retainer 6 has the protruding portion 63 protruding from the inner peripheral surface of the block body, as shown in FIG. 4, it is easy to ensure the gap of the given width.

After placing the first lowermost thermal insulating block 3 A around the skid post 11, a stud 7 set in a welding gun 8 is passed through the space 35a of the through-hole 35 of the first lowermost thermal insulating block 3A and the insertion hole 61 of the retainer 6 mounted to the through-hole 35, and a distal end of the stud 7 is welded to the outer peripheral surface of the skid post 11 by the welding gun 8. Since the first lowermost thermal insulating block 3A has two through-holes 35 at respective given positions, the distal ends of two studs 7 passed through respective ones of the two through-holes 35 are welded to the outer peripheral surface of the skid post 11. This welding step may be performed after placing the after-mentioned second lowermost thermal insulating block 3B. In FIG. 6A, a ceramic fiber sheet 9 is disposed below the first lowermost thermal insulating block 3A to absorb thermal expansion.

Subsequently, as shown in FIG. 6B, a second lowermost thermal insulating block 3B is placed in adjacent relation to the first lowermost thermal insulating block 3A. Specifically, the first lowermost thermal insulating block 3A and the second lowermost thermal insulating block 3B are placed such that the two convex parts 33 of the first lowermost thermal insulating block 3A come to be adjacent, respectively, to the two convex parts 33 of the second lowermost thermal insulating block 3B. Then, the distal ends of two studs 7 are welded to the outer peripheral surface of the skid post 11 by the welding gun 8, through the two through-holes 35 of the second lowermost thermal insulating block 3B. A ceramic fiber sheet 9 is disposed in each vertical joint area between the first lowermost thermal insulating block 3A and the second lowermost thermal insulating block 3B.

Subsequently, as shown in FIG. 6C, two middle thermal insulating blocks 4 A, 4 B are placed adjacently as lowermost-tier middle thermal insulating blocks on the adjacently-placed first and second lowermost thermal insulating blocks 3A, 3B. Specifically, the middle thermal insulating blocks 4 A, 4 B are placed adjacently such that the two concave parts 42, 42 of the lower surfaces of the adjacently-placed middle thermal insulating blocks 4 A, 4 B are fitted, respectively, to two pairs of adjacent ones of the convex portions 33, 33 of the upper surfaces of the adjacently-placed first and second lowermost thermal insulating blocks 3A, 3B. Accordingly, two pairs of adjacent ones of the convex parts 43, 43 of the lower surfaces of the adjacently-placed middle thermal insulating blocks 4A, 4B are fitted, respectively, to the two concave parts 32, 32 of the upper surfaces of the adjacently-placed first and second lowermost thermal insulating blocks 3A, 3B. After placing the middle thermal insulating blocks 4A, 4B, the distal ends of studs 7 are welded to the outer peripheral surface of the skid post 11 through the through-holes 45, in the same manner as that for the lowermost thermal insulating blocks 3A, 3B. A ceramic fiber sheet 9 is disposed in each of a horizontal joint area between a set of the lowermost thermal insulating blocks 3 A, 3 B and a set of the middle thermal insulating blocks 4A, 4B, and vertical joint areas between the two middle thermal insulating blocks 4A, 4B.

Subsequently, as shown in FIG. 6D, a castable thermal insulating material is cast into a gap between the inner peripheral surface of a stack of the thermal insulating block 3A, 3B, 4A, 4B and the outer peripheral surface of the skid post 11, thereby providing a castable thermal insulating material layer 101. Alternatively, this castable thermal insulating material layer 101 may be provided in a post-step.

Subsequently, as shown in FIG. 6E, two middle thermal insulating blocks 4C, 4D are placed adjacently as uppermost-tier middle thermal insulating blocks on the adjacently-placed lowermost-tier middle thermal insulating blocks 4A, 4B. Specifically, the uppermost-tier middle thermal insulating blocks 4C, 4D are placed adjacently such the two concave parts 42, 42 of the lower surfaces of the adjacently-placed uppermost-tier middle thermal insulating blocks 4C, 4D are fitted, respectively, to two pairs of adjacent ones of the convex parts 43, 43 of the upper surfaces of the adjacently-placed lowermost-tier middle thermal insulating blocks 4A, 4B. Accordingly, two pairs of adjacent ones of the convex parts 43, 43 of the lower surfaces of the adjacently-placed uppermost-tier middle thermal insulating blocks 4C, 4D are fitted, respectively, to the two concave parts 42, 42 of the upper surfaces of the adjacently-placed lowermost-tier middle thermal insulating blocks 4A, 4B.

Subsequently, a first uppermost thermal insulating block 5A and a second uppermost thermal insulating block 5B are placed adjacently on the adjacently-placed uppermost-tier middle thermal insulating blocks 4C, 4D. Specifically, the first and second uppermost thermal insulating blocks 5A, 5B are placed adjacently such that the two convex parts 53 of the lower surface of the first uppermost thermal insulating block 5A come to be adjacent, respectively, to the two convex parts 53 of the lower surface of the second uppermost thermal insulating block, and the two pairs of adjacent ones of the convex parts 53, 53 fit, respectively, to the two concave parts 42, 42 of the upper surfaces of the adjacently-placed uppermost-tier middle thermal insulating blocks 4C, 4D. Accordingly, two pairs of adjacent ones of the convex parts 43, 43 of the upper surfaces of the adjacently-placed uppermost-tier middle thermal insulating blocks 4C, 4D are fitted, respectively, to the two concave parts 52, 52 of the lower surfaces of the adjacently-placed uppermost thermal insulating blocks 5A, 5B.

Subsequently, as shown in FIG. 6F, a castable thermal insulating material is cast into a gap between the inner peripheral surface of a stack of the thermal insulating block 4C, 4D, 5A, 5B and the outer peripheral surface of the skid post 11, thereby providing a castable thermal insulating material layer 101. Further, a sealing material 102 is filled into the spaces of the through-holes 35, 45, 55 of the thermal insulating blocks 3A, 3B, 4A, 4B, 4C, 4D, 5A, 5B by, e.g., troweling. The step of filling the spaces of the through-holes 35, 45, 55 with the sealing material 102 may also be performed before the step of casting the castable thermal insulating material into the gap between the inner peripheral surface of the stack of thermal insulating blocks and the outer peripheral surface of the skid post 11.

The thermal insulating block structure 2 as shown in FIG. 1 is obtained through the above steps. As described in connection with FIGS. A-F, in this thermal insulating block structure 2, the two pairs of adjacent ones of the convex parts 33, 33 of the upper surfaces of the adjacently-placed two lowermost thermal insulating blocks 3A, 3B are fitted, respectively, to the two concave parts 42, 42 of the lower surfaces of the adjacently-placed lowermost-tier middle thermal insulating blocks 4A, 4B, and the two pairs of adjacent ones of the convex parts 43, 43 of the upper surfaces of the adjacently-placed two uppermost-tier middle thermal insulating blocks 4A, 4B are fitted, respectively, to the two concave parts 52, 52 of the lower surfaces of the adjacently-placed uppermost thermal insulating blocks 5A, 5B. As above, in the thermal insulating block structure 2, since the vertically constructed thermal insulating blocks are compositely joined to each other through concavo-convex fitting, it is possible to suppress relative rotation among the constructed thermal insulating blocks. Further, in this embodiment, each of the convex parts and the concave part in each of the thermal insulating blocks are continuously connected to each other by an inclined surface, so that the thermal insulating blocks constructed vertically can be smoothly joined through concavo-convex fitting. Further, in this embodiment, as clearly appearing in FIG. 4, a gap is provided between the stack of thermal insulating blocks and the skid post 11, and the castable thermal insulating material layer 101 is provided in the gap, so that it is possible to enhance the thermal insulating property of the skid post 11.

In the thermal insulating block used in this embodiment, the retainer 6 is mounted to the through-hole penetrating from the outer peripheral surface to the inner peripheral surface of the block body. The retainer 6 has the insertion hole 61 through which the stud 7 is inserted, wherein the insertion hole 61 is continuous with the through-hole. This configuration allows the stud 7 to be welded to the skid post 11 through the through-hole 55 and the insertion hole 61, as shown in, e.g., FIG. 4. Specifically, according to this embodiment, instead of preliminarily welding the stud 7 to the skid post 11 as in the conventional technique, it becomes possible to weld the stud 7 to the skid post 11 after installation of the block body. This makes it possible to simplify construction work to install thermal insulating blocks around the skid post 11. Further, since the stud 7 is inserted into the insertion hole 61 of the retainer 6 mounted to the through-hole 55, as shown in, e.g., FIG. 4, the stud 7 becomes less likely to interfere with the block body such as the inner wall surface of the through-hole 55. Therefore, when installing the thermal insulating block around the skid post, the thermal insulating block becomes less likely to be damaged.

In this embodiment, each of the insulating blocks has a semi-hollow cylindrical shape obtained by dividing a hollow cylindrical body equally into two circumferential segments. However, the number of divisions is not limited to two, but may be three, or four or more. However, as a division number increases, construction work to install thermal insulating blocks around the skid post becomes more complicated. Thus, realistically, it is reasonable to set the division number to two.

In this present embodiment, the thermal insulating block structure 2 has a two-tier middle thermal insulating block consisting of the set of lowermost-tier middle thermal insulating blocks 4A, 4B and the set of uppermost-tier middle thermal insulating blocks 4C, 4D. However, one or more tiers of middle thermal insulating blocks may be provided between the set of lowermost-tier middle thermal insulating blocks 4A, 4B and the set of uppermost-tier middle thermal insulating blocks 4C, 4D of the uppermost stage. Alternatively, the middle thermal insulating block may be composed only of a single tier. In this case, the lowermost-tier middle thermal insulating block and the uppermost-tier middle thermal insulating block become the same middle thermal insulating block. In other words, when the middle thermal insulating block is composed of a single tier, this single-tier middle insulating block serves as both the lowermost-tier middle thermal insulating block and the uppermost-tier middle thermal insulating block. In the thermal insulating block structure 2 according to this embodiment, the through-hole 45 is also provided in the middle thermal insulating block 4, and the retainer 6 is mounted to the through-hole 45. However, in the thermal insulating block structure 2, the through-hole 45 does not necessarily have to be provided in the middle thermal insulating block 4, and the retainer 6 does not necessarily have to be provided. This is because it is possible to ensure a certain level of strength as long as a stud is inserted into each of the lowermost thermal insulating blocks 3 and the uppermost thermal insulating blocks 5. As a matter of course, from a viewpoint of increasing the strength of the thermal insulating block structure 2, it is preferable that the stud is also inserted into the middle thermal insulating block 4 as in this embodiment.

In this embodiment, the lowermost thermal insulating block 3, the middle thermal insulating block 4, and the uppermost thermal insulating block 5 have a semi-hollow cylindrical shape obtained by dividing a hollow cylindrical body equally into two circumferential segments. However, they can take various shapes depending on the shape of the skid pipe. For example, when the skid post has a hollow quadrangular prism shape, each thermal insulating block may have an approximately angular-U shape obtained by dividing a hollow quadrangular cylindrical body into two. In this case, two or more through-holes to be provided in the thermal insulating block may be arranged at intervals in a longitudinal direction of the thermal insulating block.

### LIST OF REFERENCE SIGNS

1: skid pipe
11: skid post
12: skid beam
2: thermal insulating block structure
3, 3A, 3B: lowermost thermal insulating block
31: block body
32: concave part
33: convex part
34: inclined surface
35: through-hole
35a: space
4, 4A, 4B, 4C, 4D: middle thermal insulating block
41: middle thermal insulating block
42: concave part
43: convex part
44: inclined surface
45: through-hole
45a: space
5, 5A, 5B: uppermost thermal insulation block
51: block body
52: concave part
53: convex part
54: inclined surface
55: through-hole
55a: space
56, 57: locking part
6: retainer
61: insertion hole
62: flange (engaging part)
63: protruding portion
7: stud
8: welding gum
9: ceramic fiber sheet
101: castable thermal insulating material
102: sealing material

## Claims

1. A thermal insulating structure constructed by combining and stacking three types of thermal insulating blocks around a skid post, the three types of thermal insulating blocks consisting of: a lowermost thermal insulating block disposed at a lowermost tier; a middle thermal insulating block stacked on the lowermost thermal insulating block in at least one or more tiers; and an uppermost thermal insulating block disposed on an uppermost tier of the middle thermal insulating block, wherein:
the lowermost thermal insulating block has a concave part in a circumferentially middle region of an upper surface thereof, and two convex parts in circumferentially opposite end regions of the upper surface;
the middle thermal insulating block has a concave part in a circumferentially middle region of each of an upper surface and a lower surface thereof, and two convex parts in circumferentially opposite end regions of each of the upper and lower surfaces; and
the uppermost thermal insulating block has a concave part in a circumferentially middle region of a lower surface thereof, and two convex parts in circumferentially opposite end regions of the lower surface; and wherein:
each of the lowermost thermal insulating block, the middle thermal insulating block, and the uppermost thermal insulating block is provided in a number of two or more; and wherein
two or more pairs of adjacent ones of the convex parts of the upper surfaces of the two or more lowermost thermal insulating blocks which are placed adjacently are fitted, respectively, to the two or more concave parts of the lower surfaces of lowermost tiers of the two or more middle thermal insulating blocks; and
two or more pairs of adjacent ones of the convex parts of the upper surfaces of uppermost tires of the two or more middle thermal insulating blocks which are placed adjacently are fitted, respectively, to the two or more concave parts of the lower surfaces of the two or more uppermost thermal insulating blocks.

2. The thermal insulating structure as claimed in claim 1, wherein the concave part and each of the convex parts in each of the lowermost, middle and uppermost thermal insulating blocks are continuously connected to each other by an inclined surface.

3. The thermal insulating structure as claimed in claim 1 or 2, wherein a gap is provided between a stack of the lowermost, middle and uppermost thermal insulating blocks, and the skid post, and a castable thermal insulating material layer is provided in the gap.

4. A construction method for a thermal insulating block structure, wherein the thermal insulating structure is constructed by combining and stacking three types of thermal insulating blocks around a skid post, the three types of thermal insulating blocks consisting of: a lowermost thermal insulating block disposed at a lowermost tier; a middle thermal insulating block disposed on the lowermost thermal insulating block; and an uppermost thermal insulating block disposed on the middle thermal insulating block, wherein: the lowermost thermal insulating block has a concave part in a circumferentially middle region of an upper surface thereof, and two convex parts in circumferentially opposite end regions of the upper surface; the middle thermal insulating block has a concave part in a circumferentially middle region of each of an upper surface and a lower surface thereof, and two convex parts in circumferentially opposite end regions of each of the upper and lower surfaces; the uppermost thermal insulating block has a concave part in a circumferentially middle region of a lower surface thereof, and two convex parts in circumferentially opposite end regions of the lower surface; and wherein each of the lowermost thermal insulating block, the middle thermal insulating block, and the uppermost thermal insulating block is provided in a number of two, the construction method comprising:
a first step of placing the two, first and second, lowermost thermal insulating blocks around the skid post such that the two convex parts of the first lowermost thermal insulating block come to be adjacent, respectively, to the two convex parts of the second lowermost thermal insulating block;
a second step of placing the two middle thermal insulating blocks adjacently such that the two concave parts of the lower surfaces thereof are fit, respectively, to two pairs of adjacent ones of the convex parts of the first and second lowermost thermal insulating blocks; and
a third step of placing the two, first and second, uppermost thermal insulating blocks such that the two convex parts of the first uppermost thermal insulating block come to be adjacent, respectively, to the two convex parts of the second uppermost thermal insulating block, and two pairs of adjacent ones of the convex parts of the first and second uppermost thermal insulating blocks are fitted, respectively, to the two concave parts of the upper surfaces of the adjacently-placed middle thermal insulating blocks.

5. The construction method as claimed in claim 4, wherein the second step includes a step of fitting two concave parts of lower surfaces of an additional set of the two middle thermal insulating blocks, respectively, to two pairs of adjacent ones of the convex parts of the upper surface of the adjacently-placed middle thermal insulating blocks, thereby stacking them.

6. The construction method as claimed in claim 4 or 5, further comprising a step of casting a castable thermal insulating material into a gap between the skid post and a stack of the lowermost, middle and uppermost thermal insulating blocks.
